# EUROPÄISCHE PATENTSCHRIFT

(11) **EP 3 955 049 B1**
(45) Veröffentlichungstag und Bekanntmachung des Hinweises auf die Patenterteilung: **04.09.2024**
(21) Anmeldenummer: 21195211.4
(22) Anmeldetag: 22.06.2017
(51) Int. Cl.: G02B 27/09

(54) **ANORDNUNG ZUR ERZEUGUNG EINES BESSEL-STRAHLS**
ASSEMBLY FOR GENERATING A BESSEL BEAM
AGENCEMENT DE GÉNÉRATION D'UN FAISCEAU DE BESSEL

(30) Priorität: 01.07.2016 DE 102016112137; 25.08.2016 DE 102016115844
(43) Veröffentlichungstag der Anmeldung: 16.02.2022
(62) Teilanmeldung aus: 17739487.1
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: STEINKOPF, Ralf, 07745 Jena (DE); NOLTE, Stefan, 07751 Jena (DE); VETTER, Chistian, 25000 Besançon (FR); SZAMEIT, Alexander, 18209 Bad Doberan (DE); GROSS, Herbert, 07751 Kleinpürschütz (DE); ORNIGOTTI, Marco, 33210 Tampere (FI)
(74) Vertreter: Schneiders & Behrendt Bochum

(56) Entgegenhaltungen:
- CN-A- 104 880 828
- CN-A- 105 182 523
- DE-A1- 10 044 522
- DE-A1- 102004 011 190
- DE-A1- 102007 063 274
- DE-A1- 102012 218 125
- GB-A- 2 256 338

## Beschreibung

Die Erfindung betrifft eine Anordnung zur Erzeugung eines Bessel-Strahls, mit einem Strahlformungselement, das einen als ebene elektromagnetische Welle einfallenden Strahl in einen Bessel-Strahl transformiert, wobei das Strahlformungselement wenigstens eine Ringlinse und eine Fourieroptik umfasst.

Unter einem Bessel-Strahl versteht man eine spezielle Form von elektromagnetischen Wellen, insbesondere Lichtstrahlen, deren wesentliche Eigenschaft ist, dass sie nicht beugend sind, das Strahlprofil bleibt während der Ausbreitung erhalten.

Häufig wird für einen real erzeugten Bessel-Strahl der Begriff "Bessel-Gauß-Strahl" verwendet, da ein idealer Bessel-Strahl aus physikalischen Gründen nicht erzeugt werden kann. Auf diese Unterscheidung wird im Folgenden verzichtet. Die Erfindung bezieht sich auf unter realen Bedingungen erzeugte, d.h. nichtideale Bessel-Strahlen.

Es ist aus dem Stand der Technik bekannt, zur Erzeugung eines Bessel-Strahls ein Strahlformungselement zu verwenden, das einen als ebene elektromagnetische Welle einfallenden Strahl in einen Bessel-Strahl transformiert. Da es sich bei einem Bessel-Strahl um eine konische Superposition ebener Wellen handelt, werden im Stand der Technik als Strahlformungselemente hauptsächlich konische Linsen, so genannte Axicons verwendet (vgl. J. Arlt und K. Dholakia: "Generation of high-order Bessel beams by use of an axicon", Optics Communications 177.1-6, 2000, S. 297-301). Diese weisen eine hohe Effizienz auf, sind aber recht unflexibel, wenn es darum geht, mehrere Strahlen miteinander zu kombinieren. Darüber hinaus sind Axicons aufgrund der zentralen Spitze schwierig in guter Qualität herzustellen, entsprechend teuer und außerdem anfällig in Bezug auf Beschädigungen.

Aus der DE 100 44 522 A1 und aus der GB 2 256 338 A sind Anordnungen zur Erzeugung von Bessel-Strahlen bekannt.

Sollen aufwändigere Varianten von Bessel-Strahlen erzeugt werden, wie z.B. Bessel-Strahlen höherer Ordnung, werden im Stand der Technik häufig räumliche Lichtmodulatoren (SLMs) verwendet. Diese sind nach Art von Flüssigkristall-Displays ausgestaltet, die eine räumlich variable Phasen- und/oder Amplitudenmodulation der einfallenden ebenen elektromagnetischen Wellen ermöglichen. SLMs werden mittels Computern angesteuert. Sie sind äußerst flexibel einsetzbar. Die Verwendung von SLMs ist allerdings aufwendig und teuer. Ein weiterer Nachteil ist, dass SLMs eine niedrige Zerstörschwelle und hohe Verluste bei der Strahlumformung aufweisen.

Vor diesem Hintergrund ist es Aufgabe der Erfindung, eine gegenüber dem Stand der Technik verbesserte Anordnung zur Erzeugung eines Bessel-Strahls bereitzustellen. Die oben beschriebenen Nachteile der konventionellen Erzeugung von Bessel-Strahlen sollen vermieden werden.

Diese Aufgabe löst die Erfindung ausgehend von einer Anordnung der eingangs angegebenen Art durch ein dem Strahlformungselement im Strahlverlauf vorgeschaltetes Strahlvorformungselement, das den einfallenden Strahl in einen Strahl mit ringförmigem Querschnitt transformiert.

Die erfindungsgemäße Erzeugung des Bessel-Strahls basiert auf dem Fourier-Prinzip. Ein Bessel-Strahl ist, wie oben bereits erwähnt, eine konische Superposition ebener Wellen. Entsprechend ist das Raumwinkelspektrum des Bessel-Strahls durch einen scharfen, kreisförmigen Ring gegeben. Der Bessel-Strahl ergibt sich durch räumliche Fourier-Transformation eines solchen Rings.

Gemäß der Erfindung wird zur Erzeugung ringförmiger Strahlung eine Ringlinse verwendet. Die Ringlinse weist eine ringförmige, gekrümmte Oberfläche auf, die, im Querschnitt gesehen, einer Zylinderlinse entspricht, die in sich, z.B. zu einem Kreis, geschlossen ist. Die Ringlinse erzeugt in ihrer Fokusebene ein scharfes ringförmiges Strahlprofil. Dieses wird mittels der im Strahlverlauf der Ringlinse nachgeordneten Fourieroptik räumlich Fourier-transformiert. Das Resultat ist der gewünschte Bessel-Strahl. Die erfindungsgemäße Ringlinse kann, muss aber nicht zwingend kreisringförmig sein. Abweichende Ringformen, beispielsweise elliptische Formen, sind ebenfalls denkbar, um entsprechende Varianten von Bessel-Strahlen zu erzeugen.

Um die Effizienz bei der Transformation der ebenen Welle in den Bessel-Strahl zu optimieren, ist bei der erfindungsgemäßen Anordnung ein dem Strahlformungselement im Strahlverlauf vorgeschaltetes Strahlvorformungselement vorgesehen, das den als ebene Welle einfallenden Lichtstrahl in einen Strahl mit ringförmigem Querschnitt transformiert. Das Strahlvorformungselement bewirkt, dass der einfallende Strahl vollständig in den Bessel-Strahl transformiert wird. Die Strahlvorformung erfolgt korrespondierend zur Geometrie der Ringlinse. Beispielsweise kann das Strahlvorformungselement ein konkaves Axicon und ein diesem im Strahlverlauf nachgeschaltetes konvexes Axicon umfassen.

Die Fourier-Transformation kann vorteilhaft durch eine Fourierlinse, d.h. eine beliebige Sammellinse erfolgen, die, der Ringlinse nachgeordnet, als Fourieroptik eingesetzt wird. Ebenso kann die Fourier-Transformation durch einfache Fernfeldpropagation, d.h. ohne besondere optische Komponenten erfolgen.

Bei Verwendung einer Fourierlinse als Fourieroptik gemäß der Erfindung sollten die Fokusebenen der Ringlinse und der Fourierlinse zusammenfallen, so dass die Ringlinse und die Fourierlinse einer Kepler-Konfiguration oder eine Galilei-Konfiguration bilden. Der Bessel-Strahl kann entsprechend entweder mit oder ohne Zwischenfokus erzeugt werden.

Zur Superposition mehrerer Bessel-Strahlen kann das Strahlformungselement der erfindungsgemäßen Anordnung zwei oder mehr konzentrische Ringlinsen aufweisen. Deren Fokusebenen sollten vorzugsweise zusammenfallen. Die konzentrischen Ringlinsen erzeugen in ihrer gemeinsamen Fokusebene ein Strahlprofil mit Ringen unterschiedlicher Durchmesser, die durch die Fourieroptik in entsprechend überlagerte Bessel-Strahlen transformiert werden.

Bessel-Strahlen höherer Ordnung sind dadurch charakterisiert, dass sie zusätzlich zu ihrem ringförmigen Raumwinkelspektrum einen helikalen Phasenterm *N*-ter Ordnung aufweisen. *N* steht dabei für den Phasenhub nach einer vollen Umdrehung in Umfangsrichtung in Vielfachen von 2π. Zur Erzeugung eines Bessel-Strahls höherer Ordnung kann entsprechend im Strahlengang der erfindungsgemäßen Anordnung ein Phasenmanipulationselement angeordnet sein, das dem Strahl eine über den Strahlquerschnitt variierende Phasenverschiebung aufprägt, insbesondere eine helikale Phasenverschiebung. Praktisch realisiert werden kann dies z.B. durch eine Phasenplatte, die aus einem Material mit gegenüber der Umgebung abweichendem Brechungsindex besteht und bezüglich der Strahlachse in radialer Richtung und in Umfangsrichtung eine variierende Dicke aufweist, um so die gewünschte helikale Phasenverschiebung zu erhalten.

Das Strahlformungselement der erfindungsgemäßen Anordnung kann vorteilhaft besonders kompakt realisiert werden, indem die Ringlinse mit der Fourierlinse einstückig ausgebildet wird. Hierzu kann das Strahlformungselement auf der der einfallenden ebenen Welle zugewandten Oberfläche eine konkave Ringlinse aufweisen. Die gegenüberliegende Oberfläche ist gekrümmt ausgebildet und bildet so die Fourierlinse aus. Die zusammenfallenden Fokusebenen der Ringlinse und der Fourierlinse liegen auf der der einfallenden ebenen Welle zugewandten Seite des Strahlformungselementes in einer gemeinsamen Ebene (Galilei-Konfiguration).

Vorzugsweise weist das Strahlformungselement der erfindungsgemäßen Anordnung eine ringförmige Apertur auf, die mit der Ringlinse korrespondiert. Dadurch wird ausschließlich die ringförmige Strahlung im Fokus der Ringlinse durch die Fourieroptik transformiert. Störende Anteile der Strahlung werden ausgeblendet.

Ausführungsbeispiele der Erfindung werden nachfolgend anhand der Zeichnungen näher erläutert. Es zeigen:
- Figur 1:: erfindungsgemäße Anordnung in einer ersten Ausgestaltung;
- Figur 2:: erfindungsgemäße Anordnung in einer zweiten Ausgestaltung;
- Figur 3:: Strahlformungselement mit mehreren konzentrischen Ringlinsen;
- Figur 4:: Phasenplatte zur Erzeugung eines Bessel-Strahls höherer Ordnung;
- Figur 5:: Strahlvorformungselement der erfindungsgemäßen Anordnung;
- Figur 6:: erfindungsgemäße Anordnung in einer dritten Ausgestaltung mit einstückigem Strahlformungselement.

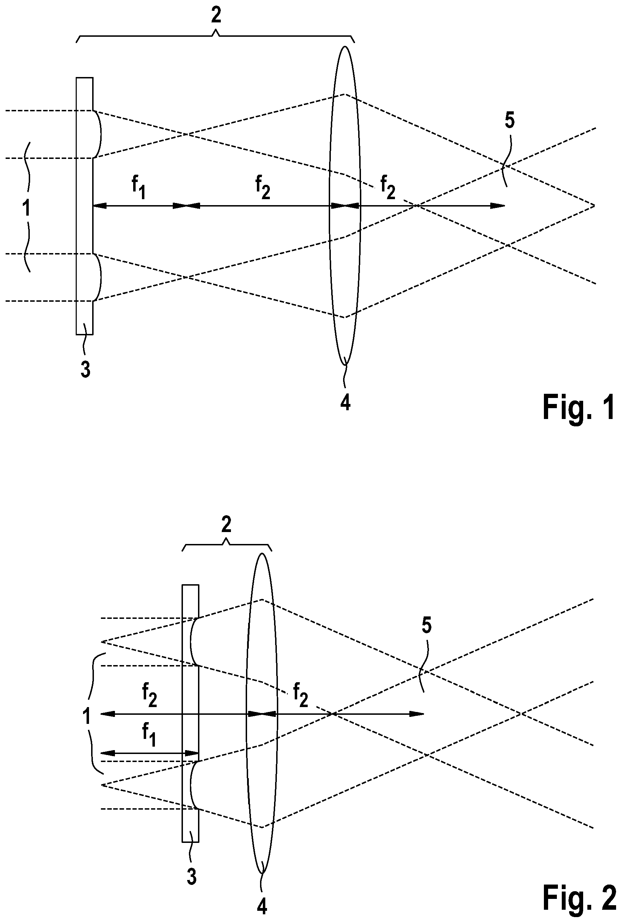

Bei der in der Figur 1 gezeigten Anordnung fällt ein Lichtstrahl 1 von links her ein. Die elektromagnetische Strahlung durchläuft ein Strahlformungselement 2, das durch eine konvexe Ringlinse 3 und eine Fourierlinse 4 gebildet ist. Durch das Strahlformungselement 2 wird der einfallende Strahl 1 in einen Bessel-Strahl 5 transformiert, der die Anordnung in der Figur 1 nach rechts verlässt. Es handelt sich um einen Bessel-Strahl 0. Ordnung. Die Brennweiten f₁ und f₂ der Ringlinse 3 bzw. der Fourierlinse 4 sind in der Figur 1 verzeichnet. Es ist zu erkennen, dass die Fokusebenen der Ringlinse 3 und der Fourierlinse 4 zusammenfallen. Somit bilden die Ringlinse 3 und die Fourierlinse 4 eine Kepler-Konfiguration, ähnlich einem Kepler-Teleskop. Die Ringlinse 3 erzeugt in der Fokusebene zwischen Ringlinse 3 und Fourierlinse 4 einen scharfen ringförmigen Strahlquerschnitt. Die dargestellte Anordnung weist also einen Zwischenfokus auf.

In dem Ausführungsbeispiel der Figur 2 kommt eine konkave Ringlinse 3 zum Einsatz. Die Anordnung weist keinen Zwischenfokus auf. Die Fokusebenen fallen auf der dem einfallenden Strahl 1 zugewandten Seite der Ringlinse 3 zusammen. Die Ringlinse 3 und die Fourierlinse 4 bilden eine Galilei-Konfiguration, ähnlich einem Galiliei-Teleskop. Die Vermeidung des Zwischenfokus ist bei Hochleistungsanwendungen von Vorteil. Außerdem ergibt sich eine deutlich kompaktere Bauweise. Nachteilig ist, dass in die Fokusebene, d.h. in die Fourierebene der Anordnung, nicht (z.B. durch Blenden) eingegriffen werden kann. Auch mit der in der Figur 2 dargestellten Anordnung wird ein Bessel-Strahl 0. Ordnung erzeugt.

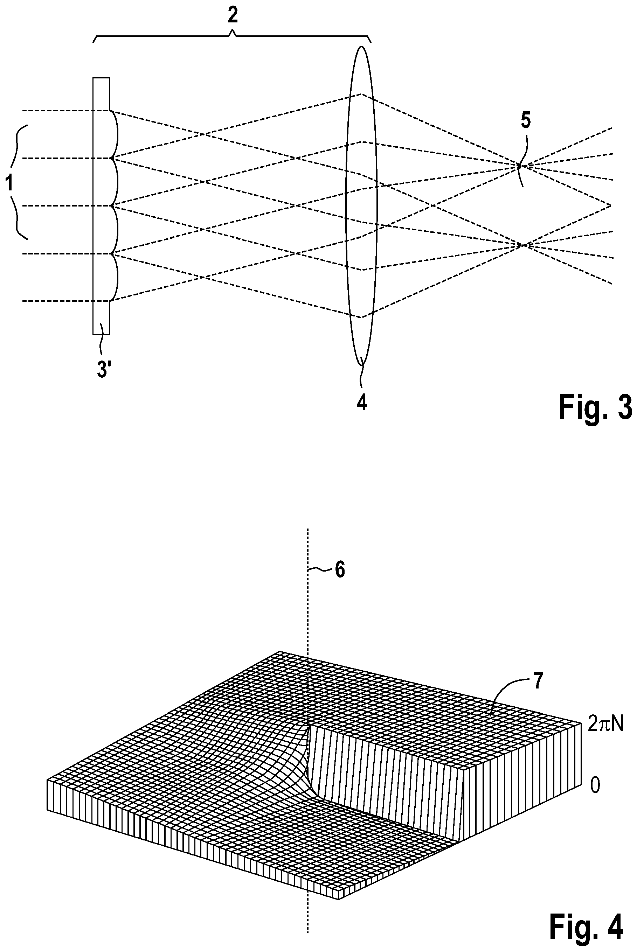

Ist es erforderlich, mehrere Bessel-Strahlen zu überlagern, kann, wie in Figur 3 gezeigt, ein Strahlformungselement 2 zum Einsatz kommen, das zwei (oder mehr) konzentrische Ringlinsen aufweist, deren Fokusebenen zusammenfallen. Bei dem Ausführungsbeispiel der Figur 3 sind zwei Ringlinsen miteinander einstückig in einem Linsenelement 3' integriert. Das Strahlformungselement 2 erzeugt einen entsprechend überlagerten Strahl 5`. In Figur 3 bilden das Linsenelement 3' und die Fourierlinse 4 wiederum eine Kepler-Konfiguration.

Das Strahlformungselement 2 weist bei den dargestellten Ausführungsbeispielen eine ringförmige Apertur auf, um die für die Erzeugung des Bessel-Strahls unerwünschten Anteile des einfallenden Strahls 1 auszublenden. Beispielsweise können die Ringlinsen 3, 3' bei den Ausführungsbeispielen der Figuren 1, 2 und 3 in den planen Bereichen, d.h. außerhalb der konvex bzw. konkav geformten ringförmigen Bereiche, reflektierend oder absorbierend beschichtet sein. Ebenso können die unerwünschten Anteile der Strahlung in der jeweiligen Fokusebene, z.B. durch eine geeignete Blendenanordnung, entfernt werden.

Bessel-Strahlen höherer Ordnung sind dadurch charakterisiert, dass sie zusätzlich zu ihrem ringförmigen Raumwinkelspektrum einen helikalen Phasenterm N-ter Ordnung aufweisen. Dieser kann durch ein im Strahlengang angeordnetes Phasenmanipulationselement erzeugt werden, das dem Strahl eine entsprechend über den Strahlquerschnitt variierende Phasenverschiebung aufprägt. Ein Phasenmanipulationselement in Form einer Phasenplatte, durch die dem Strahl eine helikale Phasenverschiebung aufgeprägt wird, ist in Figur 4 dargestellt. Die Phasenplatte 7, die z.B. aus Quarzglas besteht, weist bezüglich der Strahlachse 6 in radialer Richtung und/oder in Umfangsrichtung eine variierende Dicke auf. Zur Erzeugung des helikalen Phasenterms wächst z.B. die Dicke proportional zum Winkel in Umfangsrichtung an. Zur Überlagerung mehrerer Bessel-Strahlen unterschiedlicher Ordnungen kann eine Phasenplatte verwendet werden, die mehrere konzentrische "Rampen" aufweist, d.h. mehrere konzentrische, ringförmige Abschnitte mit unterschiedlich proportional zum Winkel in Umfangsrichtung variierender Dicke. Alternativ eignet sich als Phasenmanipulationselement ein räumlicher Lichtmodulator (SLM), der geeignet angesteuert wird. Das Phasenmanipulationselement kann an beliebiger Stelle im Strahlengang angeordnet sein, bei den dargestellten Ausführungsbeispielen vor oder hinter der Fourierlinse 4. Vorzugsweise ist das Phasenmanipulationselement in der Fokusebene angeordnet.

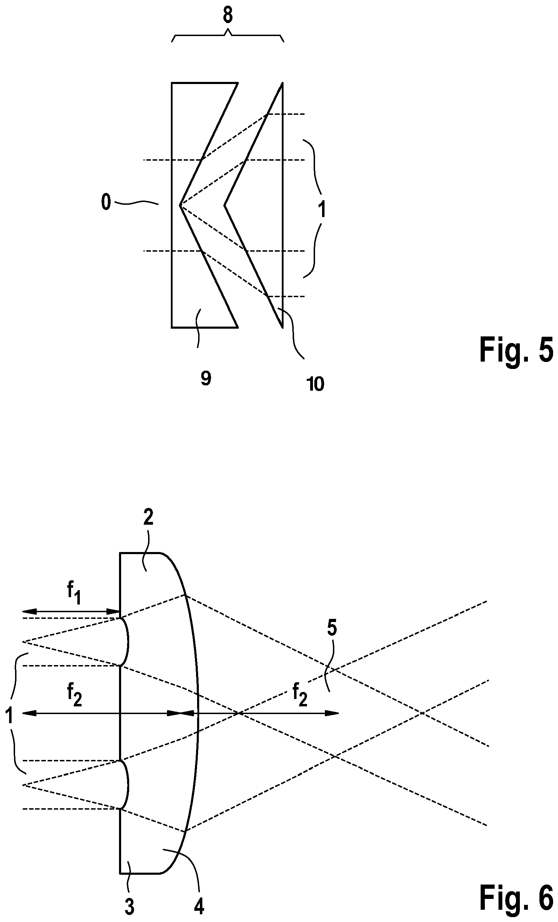

Gemäß der Erfindung erfolgt eine Vorformung der als ebene elektromagnetische Welle einfallenden Strahlung 1. Diese Strahlvorformung kann mittels eines Strahlvorformungselementes 8 erfolgen, wie es in der Figur 5 dargestellt ist. Mit 0 ist der von links einfallende Strahl mit z.B. gaußförmigem Strahlprofil bezeichnet. Dieser durchläuft ein konkaves Axicon 9 und ein diesem im Strahlverlauf mit Abstand nachgeschaltetes, konvexes Axicon 10. Das Resultat ist der ringförmige Lichtstrahl 1, der, wie in den Figuren 1 und 2 gezeigt, auf die Ringlinse 3 des Strahlformungselementes 2 auftrifft. Der Durchmesser des Ringstrahls kann durch den Abstand der Axicons 9, 10 justiert werden. Durch das Strahlvorformungselement 8 lässt sich die Effizienz bei der Erzeugung des Bessel-Strahls 5 steigern.

Bei dem in der Figur 6 gezeigten Ausführungsbeispiel umfasst das Strahlformungselement 2 nur ein einzelnes monolithisches Element, indem die konkave Ringlinse 3 und die Fourierlinse 4 einstückig miteinander ausgebildet sind. Ähnlich wie bei dem in der Figur 2 dargestellten Ausführungsbeispiel fallen die Fokusebenen der Fourierlinse 4 und der Ringlinse 3 auf der dem einfallenden Strahl 1 zugewandten Seite des Strahlformungselementes 2 zusammen. Es handelt sich um eine Galilei-Konfiguration. In entsprechender Art und Weise lässt sich ein monolithisches Strahlformungselement 2 auch in Keppler-Konfiguration realisieren, bei dem dann die Fokusebene im Inneren liegt. Eine solche Ausgestaltung wäre entsprechend großvolumiger.

Die Linsenoberflächen der in den Figuren gezeigten Ringlinsen 3, 3' können sphärisch oder auch asphärisch sein. Im einfachsten Fall werden sphärische Oberflächen verwendet.

Das erfindungsgemäße Prinzip zur Erzeugung eines Bessel-Strahls kann im optischen Spektralbereich, z.B. für Lasersysteme, verwendet werden. Das Prinzip lässt sich jedoch auch in anderen Wellenlängenbereichen, wie z.B. im Bereich der Mikrowellen oder der Radiowellen, anwenden.

Vorteile der erfindungsgemäßen Anordnung sind die folgenden: Überlagerungen von Bessel-Strahlen sind einfach und direkt zu erzeugen. Sie erfordern keine komplexen und damit verlustbehafteten Aufbauten. Die verwendeten optischen Komponenten (Ringlinse, Fourierlinse) besitzen keine abstehenden oder scharfkantigen Strukturen und sind damit wenig anfällig in Bezug auf mechanische Beschädigungen. Die erfindungsgemäße Anordnung weist geringe Verluste und eine hohe Zerstörschwelle auf, so dass sie für die Anwendung im Hochleistungsbereich geeignet ist. Bei der erfindungsgemäßen Anordnung definiert nicht die Ringlinse, sondern die darauf folgende Fourieroptik den maximalen Aperturdurchmesser. Daher ist die komplexeste Komponente der Anordnung (die Ringlinse) nicht gleichzeitig auch die notwendigerweise größte Komponente.

Die erfindungsgemäße Anordnung kann z.B. im Bereich der Materialbearbeitung eingesetzt werden. Bessel-Strahlen weisen einen ausgedehnteren Fokus auf als konventionelle Strahlformen und zeigen Selbstheilungseigenschaften in Propagationsrichtung. Das macht Bessel-Strahlen interessant für verschiedene Arten der Materialbearbeitung wie Schneiden, Bohren, Schweißen sowie Lithographie und medizinische Anwendungen. Ebenso lässt sich der ausgedehnte Fokus von Bessel-Strahlen im Bereich der Mikroskopie einsetzen, um eine größere Schärfentiefe zu realisieren, tiefere Gewebeschichten bei medizinischen Anwendungen abzubilden sowie Rasterverfahren zu beschleunigen. Bessel-Strahlen können mit Vorteil für so genannte optische Pinzetten verwendet werden. Mit Bessel-Strahlen und deren Superpositionen können mikroskopische Teilchen oder einzelne biologische Zellen transportiert, ausgerichtet oder rotiert werden. Weiterhin sind Bessel-Strahlen vorteilhaft einsetzbar im Bereich der Messtechnik. Optische Fernmessverfahren erfordern eine gute Strahlqualität trotz störender externer Einflüsse. Die selbstheilenden Eigenschaften von Bessel-Strahlen entlang der Propagationsrichtung sind daher vorteilhaft für atmosphärische Anwendungen, Interferometrie und Tiefenspektroskopie.

## Patentansprüche

1. Anordnung zur Erzeugung eines Bessel-Strahls (5), mit einem Strahlformungselement (2), das einen als ebene elektromagnetische Welle einfallenden Strahl (1) in einen Bessel-Strahl (5) transformiert, wobei das Strahlformungselement (2) wenigstens eine Ringlinse (3, 3`) und eine Fourieroptik umfasst,
**gekennzeichnet durch** ein dem Strahlformungselement (2) im Strahlverlauf vorgeschaltetes Strahlvorformungselement (8), das den einfallenden Strahl (0) in einen Strahl (1) mit ringförmigem Querschnitt transformiert.

2. Anordnung nach Anspruch 1, **dadurch gekennzeichnet, dass** die Fourieroptik eine Fourierlinse (4) ist.

3. Anordnung nach Anspruch 2, **dadurch gekennzeichnet, dass** die Fokusebenen der Ringlinse (3, 3') und der Fourierlinse (4) zusammenfallen, so dass die Ringlinse (3, 3') und die Fourierlinse (4) eine Kepler-Konfiguration oder eine Galilei-Konfiguration bilden.

4. Anordnung nach einem der Anspruch 2 oder 3, **dadurch gekennzeichnet, dass** die Ringlinse (3, 3') mit der Fourierlinse (4) einstückig ausgebildet ist.

5. Anordnung nach einem der Ansprüche 1 bis 4, **dadurch gekennzeichnet, dass** das Strahlformungselement (2) zwei oder mehr konzentrische Ringlinsen aufweist.

6. Anordnung nach einem der Ansprüche 1 bis 5, **gekennzeichnet durch** ein im Strahlengang angeordnetes Phasenmanipulationselement, das dem Strahl eine über den Strahlquerschnitt variierende Phasenverschiebung aufprägt.

7. Anordnung nach Anspruch 6, **dadurch gekennzeichnet, dass** das Phasenmanipulationselement dem Strahl eine helikale Phasenverschiebung aufprägt.

8. Anordnung nach Anspruch 6 oder 7, **dadurch gekennzeichnet, dass** das Phasenmanipulationselement eine Phasenplatte (7) mit bezüglich der Strahlachse (6) in radialer Richtung und/oder in Umfangsrichtung variierender Dicke ist.

9. Anordnung nach einem der Ansprüche 1 bis 8, **dadurch gekennzeichnet, dass** das Strahlformungselement (2) eine ringförmige Apertur aufweist.

10. Anordnung nach einem der Ansprüche 1 bis 9, **dadurch gekennzeichnet, dass** das Strahlvorformungselement (8) ein konkaves Axicon (9) und ein diesem im Strahlverlauf nachgeschaltetes konvexes Axicon (10) umfasst.

## Claims

1. Assembly for generating a Bessel beam (5), having a beam shaping element (2) which transforms a beam (1) incident as a plane electromagnetic wave into a Bessel beam (5), wherein the beam shaping element (2) comprises at least one ring lens (3, 3') and a Fourier optics,
**characterized by**
a beam pre-shaping element (8) connected upstream of the beam shaping element (2) in the beam path, which transforms the incident beam (0) into a beam (1) with an annular cross-section.

2. Assembly according to claim 1, **characterized in that** the Fourier optics is a Fourier lens (4).

3. Assembly according to claim 2, **characterized in that** the focal planes of the ring lens (3, 3') and the Fourier lens (4) coincide, such that that the ring lens (3, 3') and the Fourier lens (4) form a Keplerian configuration or a Galilean configuration.

4. Assembly according to any one of claim 2 or 3, **characterized in that** the ring lens (3, 3') is formed in one piece with the Fourier lens (4).

5. Assembly according to any one of claims 1 to 4, **characterized in that** the beam shaping element (2) comprises two or more concentric ring lenses.

6. Assembly according to any one of claims 1 to 5, wherein a phase manipulation element is arranged in the beam path and impinges on the beam a phase shift varying over the beam cross-section.

7. Assembly according to claim 6, wherein the phase manipulation element impinges on the beam a helical phase shift.

8. Assembly according to claim 6 or 7, **characterized in that** the phase manipulation element is a phase plate (7) with a thickness varying in the radial direction and/or in the circumferential direction with respect to the beam axis {6).

9. Assembly according to any one of claims 1 to 8, **characterized in that** the beam shaping element (2) has an annular aperture.

10. Assembly according to any one of claims 1 to 9, **characterized in that** the beam preforming element (8) comprises a concave axicon (9) and a convex axicon (10) connected downstream thereof in the beam path.

## Revendications

1. Agencement de génération d'un faisceau de Bessel (5), comprenant un élément de formation de faisceau (2) qui transforme un faisceau (1) incident sous forme d'onde électromagnétique plane en un faisceau de Bessel (5), l'élément de formation de faisceau (2) comprenant au moins une lentille annulaire (3, 3') et une optique de Fourier,
**caractérisé par**
un élément de préformation de faisceau (8) placé en amont de l'élément de formation de faisceau (2) dans le parcours du faisceau, élément de préformation de faisceau (8) qui transforme le faisceau incident (0) en un faisceau (1) de section transversale annulaire.

2. Agencement selon la revendication 1, **caractérisé en ce que** l'optique de Fourier est une lentille de Fourier (4).

3. Agencement selon la revendication 2, **caractérisé en ce que** les plans focaux de la lentille annulaire (3, 3') et de la lentille de Fourier (4) coïncident, de sorte que la lentille annulaire (3, 3') et la lentille de Fourier (4) forment une configuration de Kepler ou une configuration de Galilée.

4. Agencement selon l'une des revendications 2 ou 3, **caractérisé en ce que** la lentille annulaire (3, 3') est d'une seule pièce avec la lentille de Fourier (4) est réalisée.

5. Agencement selon l'une des revendications 1 à 4, **caractérisé en ce que** l'élément de formation de faisceau (2) comprend deux ou plusieurs lentilles annulaires concentriques.

6. Agencement selon l'une des revendications 1 à 5, **caractérisé en ce que** par un élément de manipulation de phase disposé sur le trajet du faisceau, qui impose au faisceau un décalage au phase variable sur la section transversale du faisceau.

7. Agencement selon la revendication 6, **caractérisée en ce que** l'élément de manipulation de phase au faisceau impose au faisceau un décalage de phase hélicoïdal.

8. Agencement selon la revendication 6 ou 7, **caractérisé en ce que** l'élément de manipulation de phase est une plaque de phase (7) d'épaisseur variable par rapport à l'axe de faisceau {6) dans la direction radiale et/ou dans la direction circonférentielle.

9. Agencement selon l'une des revendications 1 à 8, **caractérisé en ce que** l'élément de formation de faisceau (2) présente une ouverture annulaire.

10. Agencement selon l'une des revendications 1 à 9, **caractérisé en ce que** l'élément de préformation de faisceau (8) comprend un axicon concave (9) et un axicon convexe (10) placé en aval de celui-ci dans le trajet du faisceau.
